# EUROPÄISCHE PATENTSCHRIFT

(11) **EP 1 167 096 B1**
(45) Veröffentlichungstag und Bekanntmachung des Hinweises auf die Patenterteilung: **24.01.2007**
(21) Anmeldenummer: 01115493.7
(22) Anmeldetag: 27.06.2001
(51) Int. Cl.: B60J 1/18, B60J 7/06

(54) **Führungsvorrichtung für eine aufklappbare Heckscheibe eines Kraftfahrzeugs und mit der genannten Vorrichtung ausgestattetes Kraftfahrzeug**
Guiding device for pivotable rear vehicle window and vehicle equipped with such device
Dispositif de guidage pour lunette arrière escamotable et véhicule équipé avec ce dispositif

(30) Priorität: 27.06.2000 FR 0008210
(43) Veröffentlichungstag der Anmeldung: 02.01.2002
(73) Patentinhaber: Webasto Vehicle Systems International GmbH, 82131 Stockdorf (DE)
(72) Erfinder: Guicheteau, Jean-Luc, 49300 Cholet (FR)
(74) Vertreter: Wiese, Gerhard

(56) Entgegenhaltungen:
- GB-A- 446 991
- US-A- 1 390 554
- US-A- 5 052 747

## Beschreibung

Die vorliegende Erfindung bezieht sich auf ein mit einer Führungsvorrichtung für eine aufklappbare Heckscheibe eines ausgestattetes Kraftfahrzeug, gemäß Oberbegriff des Anspruchs 1.

Kraftfahrzeuge, welche diese Art von Heckscheiben aufweisen, sind im allgemeinen mit einem Schiebedach ausgestattet, das im offenen Zustand auf der Heckscheibe aufliegt. Die Heckscheibe und das von ihr getragene Dach werden dann in einer dafür vorgesehenen Aufnahme, beispielsweise im Kofferraum, versenkt.

Um die Führung der Heckscheibe einerseits im Laufe ihres Versenkens und ihres Herausfahrens andererseits und insbesondere bei Fahrzeugen zu steuern, bei denen die Betätigung der Heckscheibe von Hand erfolgt, wird im allgemeinen eine Führungseinrichtung des Typs verwendet, welche mindestens einen mit einem ersten Ende versehenen, zum Tragen der Heckscheibe geeigneten Arm aufweist, und der ein zweites Ende aufweist, welches Kippmittel aufweist, die mit einem mit der Karosserie des Fahrzeuges fest verbundenen Führungsorgan zusammenwirken, um das Kippen des Armes zwischen der ausgefahrenen Stellung, bei der die Heckscheibe auf einem karosseriefesten Anschlag aufsitzt, und einer versenkten Stellung, bei der die Heckscheibe in einer Aufnahme untergebracht ist, welche im Boden des Kofferraums des Fahrzeuges angeordnet ist, zu führen.

Nach dem Stand der Technik verwenden die Führungsvorrichtungen dieser Art ein Führungsorgan, welches geeignet ist, die Bewegung des Arms entsprechend einer einzigen Rotationsbewegung zu bewirken.

Diese Technik weist einen wesentlichen Nachteil insoweit auf, als der die Heckscheibe aufnehmende Falz mit einer Dichtung versehen ist, bei der die Gefahr besteht, daß sie bei diesem Vorgang durch Abnutzung langfristig nachteilig verändert wird.

Der Erfindung liegt die Aufgabe zugrunde, eine Führungsvorrichtung zu schaffen, mittels der eine die Dichtung schonende Betätigung der Heckscheibe ermöglicht wird..

Diese Aufgabe wird durch die Merkmale des Patentanspruchs 1 gelöst. Vorteilhafte Ausgestaltungen der Erfindung sind den Unteransprüchen zu entnehmen.

Die Erfindung hat eine Führungsvorrichtung zum Gegenstand, welche dadurch gekennzeichnet ist, daß das zweite Ende des Arms und das Führungsorgan jeweils zueinander komplementäre Mittel aufweisen, welche so angeordnet sind, daß sie bei dem Versenken die Bewegung des Arms gemäß einem ersten Hub führen, in dessen Verlauf der Arm im wesentlichen in Translationsrichtung verschoben wird, so daß die Heckscheibe über den genannten Falz angehoben wird, und anschließend gemäß einem zweiten Hub, in dessen Verlauf der Arm sich um die genannten Kippmittel dreht.

So wird jede nachteilige Veränderung der Dichtung insoweit verhindert, als vor dem eigentlichen Kippen der Heckscheibe diese von der Dichtung abgehoben wird.

Die erfindungsgemäße Führungsvorrichtung kann auch eines oder mehrere der folgenden Merkmale entweder einzeln oder in sämtlichen möglichen technischen Kombinationen aufweisen:
- das Führungsorgan weist eine mit der Fahrzeugkarosserie fest verbundene und mit einer Führungsöffnung, in der sich ein mit dem zweiten Ende des Armes fest verbundener Finger bewegt, versehene Platine auf, wobei die Öffnung einen ersten und zweiten Teil aufweist, die jeweils in ihrer Verlängerung liegen und so ausgebildet sind, daß sie die Führung des Arms jeweils nach den ersten und zweiten Hüben ermöglichen;
- die Platine weist ein zentrales freilaufendes Ritzel und einen kreisförmigen peripherischen Kragen auf, der die gleiche Achse wie das genannte freilaufende zentrale Ritzel aufweist, wobei der genannte Kragen auf einem Teil seiner Innenfläche ein am Rand des zweiten Teils der Öffnung liegendes Zahnsegment aufweist und wobei das Ritzel und das Zahnsegment mit einem entsprechenden Ritzel zusammenwirken, das mit dem Arm fest verbunden ist und dessen Achse in bezug auf den Finger versetzt ist;
- das Ritzel des Arms ist in ständigem Eingriff mit dem auf der Platine montierten freilaufenden Ritzel und wird während des ersten Hubs des Arms an dessen Ende das Ritzel des Arms in das Zahnsegment eingreift, um das Kippen des Arms zu steuern, durch die innere glatte Oberfläche des Kragens geführt;
- außerdem weist sie einen Servozylinder auf, dessen aktives Ende auf dem Arm montiert ist;
- das Führungsorgan weist erste und zweite Schwingarme auf, die jeweils auf einem mit dem fahrzeugkarosseriefesten Träger in einer um ein erstes Ende drehbaren Weise montiert sind und deren zweites Ende auf dem Arm in der Weise montiert ist, daß in der ausgefahrenen Stellung des Arms die Drehachsen des ersten Schwingarms und des zweiten Schwingarms jeweils bezüglich des Trägers voneinander beabstandet und bezogen auf den Arm in der Nähe der Drehachsen des zweiten Schwingarms und des ersten Schwingarms angeordnet sind;
- in ausgefahrener Stellung des Arms erstrecken sich die beiden Schwingarme im wesentlichen parallel;
- die Drehachse des ersten Schwingarms in bezug auf den Träger bildet einen Anschlag zur Begrenzung der Winkelbewegung des Arms, auf dem letzterer in seiner ausgefahrenen Stellung aufliegt, in der der erste Schwingarm ausgehend von seiner Drehachse in der Weise auf dem Träger ausgerichtet wird, daß dem Arm der erste Hub vorgegeben wird;
- sie weist einen Gelenkservozylinder auf dem Träger und einen dritten Schwingarm auf, welcher ein drehbar auf dem Arm montiertes Ende und ein auf dem aktiven Ende des Servozylinders montiertes entgegengesetztes Ende aufweist;
- der Servozylinder wird auf dem Träger mittels eines vierten Schwingarms montiert, welcher an einem Ende auf dem Träger und am anderen Ende auf dem aktiven Ende des Zylinders drehbar montiert ist.

Die Erfindung hat ferner ein Kraftfahrzeug zum Gegenstand, welches eine versenkbare Heckscheibe und ein Schiebedach aufweist, dessen Elemente geeignet sind, in der Offenstellung des Dachs oberhalb der Heckscheibe zusammengelegt zu werden, dadurch gekennzeichnet, daß es wie oben beschrieben mindestens eine Führungsvorrichtung aufweist, welche geeignet ist, die von dem Dach und von der Heckscheibe gebildete Einheit zu führen.

Weitere erfindungswesentliche Merkmale und Vorteile gehen aus der nachstehenden Beschreibung hervor, in der mit Bezug auf die Zeichnungen Ausführungsbeispiele erläutert werden. Es zeigt:
- Fig. 1: eine schematische Profildarstellung eines Hecks eines Kraftfahrzeuges, dessen Heckscheibe mit einer erfindungsgemäßen Führungseinrichtung versehen ist;
- Fig. 2: eine perspektivische Ansicht eines Ausführungsbeispiels einer erfindungsgemäßen Führungsvorrichtung;
- Fig. 3 bis 5: Teilaufrißansichten mit der Darstellung der Führungsvorrichtung nach Fig. 2 in verschiedenen Stellungen des die Heckscheibe tragenden Arms, wobei die beiden Flächen des Führungsorgans in jeder dieser Stellungen dargestellt werden;
- Fig. 6: eine perspektivische Explosionszeichnung einer anderen Ausführungsform der erfindungsgemäßen Führungseinrichtung und
- Fig. 7 bis 9: teilweise Aufrißansichten mit der Darstellung der Führungsvorrichtung nach Fig. 6 in verschiedenen Stellungen des die Heckscheibe tragenden Arms.

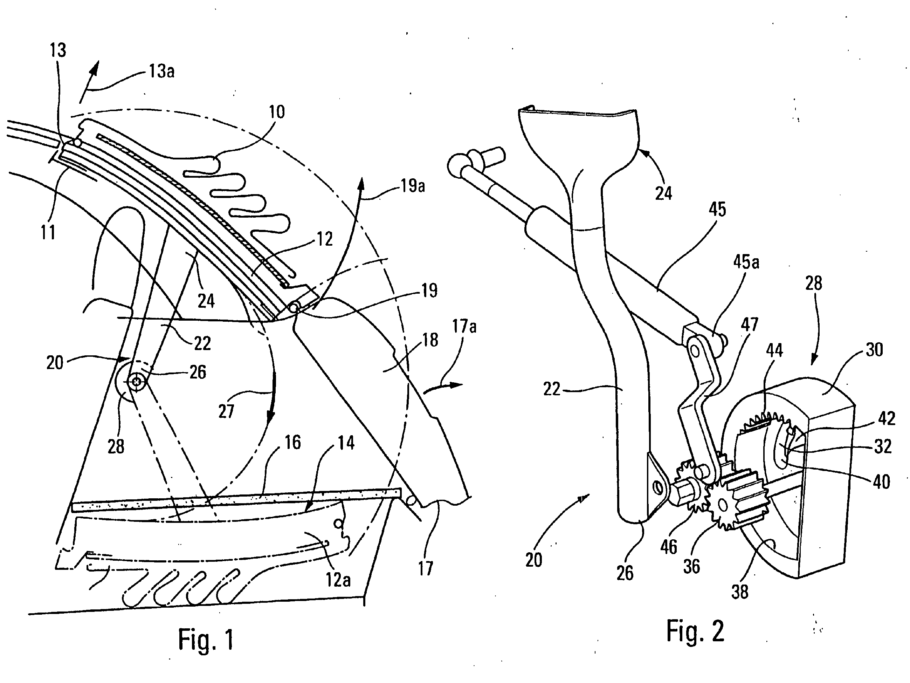

Zunächst ist unter Bezugnahme auf Fig. 1 das dort dargestellte Kraftfahrzeug mit einem Schiebedach 10 ausgestattet, das in dieser Figur in offener Stellung dargestellt wird, in der es die Heckscheibe 12 des Fahrzeuges abdeckt.

Bei dem dargestellten Beispiel besteht das Schiebedach 10 aus einem Faltdach mit einem elastischen Verdeck, das in seiner offenen Stellung oberhalb der Heckscheibe 12 aufgefaltet ist.

Die Heckscheibe 12 ist ihrerseits vom versenkbaren Typ, d.h., daß sie in in bezug auf die Fahrzeugkarosserie beweglich zwischen einer ersten in Fig. 1 in durchgezogenen Linien dargestellten aktiven Stellung, bei der sie auf einem schematisch bei 11 dargestellten Falz der Karosserie aufliegt, und einer versenkten in dieser Figur in gestrichelten Linien dargestellten und mit 12a bezeichneten Stellung, bei der sie in einer am Boden des Kofferraums des Fahrzeuges angeordneten Aufnahme 14 untergebracht ist, beweglich ist.

Bei beiden Stellungen der Heckscheibe 12 ist beispielsweise die Aufnahme 14 durch einen abnehmbaren Deckel 16 abgeschlossen, welcher dem Kofferraumboden eine ebene Oberfläche gibt.

In der ersten Stellung liegt das Fenster 12 einerseits auf dem Falz 11 auf und andererseits mit seiner hinteren Kante auf dem Deckel 18 des Kofferraums des Fahrzeuges, welcher um eine Drehachse 17 in Richtung des Pfeils 17a drehbar montiert ist.

Insbesondere liegt die Heckscheibe 12 in der ersten Stellung auf dem Falz 11 über eine (nicht dargestellte), auf dem genannten Falz angebrachte Dichtung und auf dem Deckel 18 über eine schematisch bei 19 dargestellte Dichtung auf. Es ist zu bemerken, daß es vor der Öffnung des Deckels 18 in der Richtung des Pfeils 17a notwendig ist, die Heckscheibe 12 in Richtung des Pfeils 19a anzuheben, um die Dichtung 19 freizugeben. Diesbezüglich ist es ausreichend, das Glas der Heckscheibe bezüglich eines Rahmens der Heckscheibe drehbar nach oben zu montieren, wobei die Heckscheibe 12 das Glas und einen Rahmen dafür aufweist.

Zum Zwecke der Begleitung der Bewegung der Heckscheibe 12 und gegebenenfalls des Schiebedachs 10 und um jede schädliche Veränderung der Dichtung zu vermeiden, weist das Kraftfahrzeug eine allgemein mit 20 bezeichnete Führungseinrichtung auf.

Die Führungseinrichtung 20 weist im wesentlichen einen Arm 22 auf, der mit einem ersten, an sich bekannten, zum Tragen der Heckscheibe 12 geeignete Mittel aufweisenden Ende 24 und mit einem entgegengesetzten, drehbar an der Karosserie des Fahrzeuges montierten Ende 26 versehen ist und mit einem Führungsorgan 28 zusammenwirkt, um die Drehbewegung des Arms 22 zwischen der ausgefahrenen Stellung der Heckscheibe 12 und der versenkten Stellung 12a zu führen.

Wie im folgenden noch detaillierter beschrieben ist, weisen das zweite Ende 26 des Arms und das Führungsorgan 28 jeweils komplementäre Mittel auf, die die Führung des Arms 22 im Laufe des Versenkens während eines ersten Hubs sicherstellen, in dessen Verlauf die Heckscheibe 12 von dem Falz abgehoben wird, worauf ein zweiter Hub folgt, in dessen Verlauf sich der Arm dreht.

Ein erstes Ausführungsbeispiel der erfindungsgemäßen Führungsvorrichtung wird nun unter Bezugnahme auf die Figuren 2 bis 5 beschrieben.

Nach diesem Ausführungsbeispiel wird das Führungsorgan 28 im wesentlichen durch eine Platine 30 gebildet, welche an der Karosserie des Fahrzeuges, beispielsweise in der Nähe bzw. hinter den Rücksitzen, befestigt ist, und es weist eine Führungsöffnung 32 auf, in der sich ein Finger 34 bewegt, der von dem zweiten Ende 26 des Arms 22 getragen wird und sich rechtwinklig zur allgemeinen Achse des genannten Arms 22 erstreckt.

Im übrigen trägt die Platine 30 ein zentrales, freilaufend auf letzterer montiertes Ritzel 36 und ist mit einem peripherischen, zum Ritzel 36 koaxialen Kragen 38 versehen.

Die Öffnung 32 weist einen ersten Teil 40 und einen zweiten Teil 42 in Verlängerung zueinander auf, wobei der Kragen 38 an einem in radialer Richtung innenliegenden Teil seiner Oberfläche 39 mit einem Zahnsegment 44 versehen ist, das an den zweiten Teil 42 der Öffnung 32 anschließt.

Das zweite Ende 26 des Arms 22 weist seinerseits ein festes Ritzel 46 auf, das ständig mit dem auf der Platine 30 montierten freilaufenden Ritzel 36 in Eingriff steht, das sich auf die peripherische Innenfläche 39 des Kragens 38 abstützt und geeignet ist, in das Zahnsegment 44 einzugreifen.

Die oben beschriebene Führungsvorrichtung wird durch einen Servozylinder 45 ergänzt, dessen freies Ende 45a mittels eines Schwingarms 47 an dem Arm 22 angelenkt ist.

Die oben beschriebene Führungsvorrichtung funktioniert in folgender Weise.

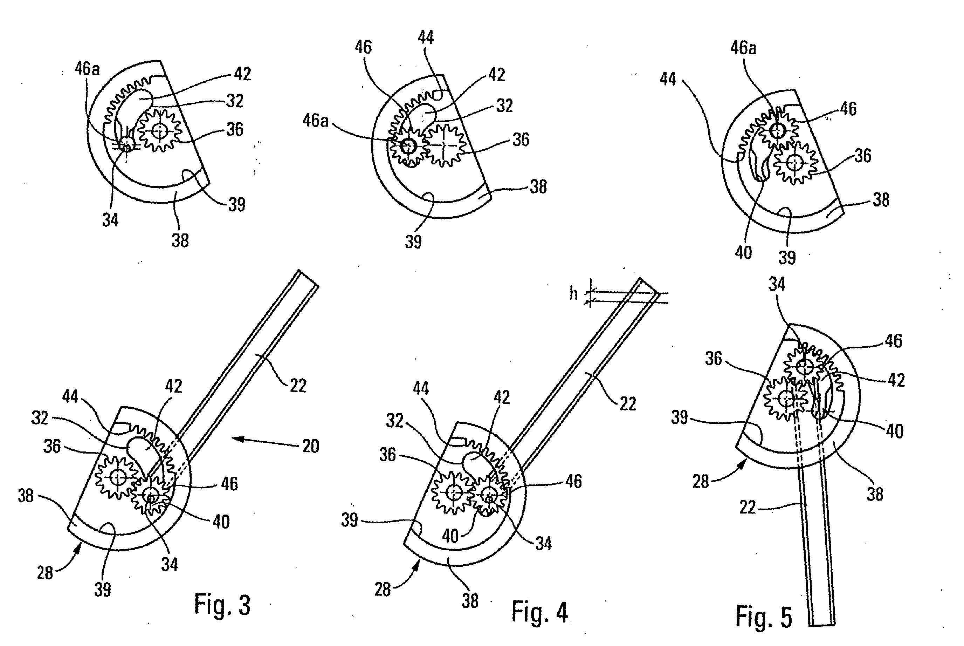

Zunächst wird in der ausgefahrenen Stellung des Arms 22, bei der die Führungsvorrichtung in der in Fig. 3 dargestellten Stellung befindlich ist, der Finger 34 des Arms 22 in dem ersten Teil 40 der Öffnung 32 positioniert, die in diesem Bereich eine geringere Breite aufweist als im zweiten Teil 42, und das von dem Arm 22 geführte Ritzel 46 stützt sich gegen die glatte peripherische Innenfläche 39 des Kragens 38.

Wenn die Heckscheibe 12 ausgehend von der ersten ausgefahrenen Stellung von Hand nach oben in die Nähe ihrer vorderen Kante 13 (Pfeil 13a) bewegt wird, verläuft der von dem Arm 22 geführte Finger 34 zunächst längs des ersten Teils 40 der Öffnung 32 bis zu der in Fig. 4 dargestellten Stellung, bei der er zwischen den beiden Teilen 40 und 42 der genannten Öffnung befindlich ist.

Es wird bemerkt werden, daß die Breite des Teils 40 der Öffnung im wesentlichen dem Durchmesser des Fingers 34 entspricht und daß letztere in bezug auf die Achse 46a des Ritzels 46 des Arms 22 versetzt ist.

Demzufolge wird im Laufe des ersten Hubs des Arms 22 letzterer in der Translationsrichtung in einer der allgemeinen Achse des ersten Teils 40 der Öffnung 32 entsprechenden Richtung, d.h. also im wesentlichen nach oben und nach hinten im Kraftfahrzeug, in der Weise verschoben, daß die Heckscheibe von dem Falz 11 und der entsprechenden Dichtung angehoben wird, wie dies schematisch in Fig. 4 bei h dargestellt wird.

Am Ende des ersten Hubs greift das Ritzel 46 des Arms 22 in das Zahnsegment 44 des Kragens 38 ein, was eine entsprechende Drehung des Arms 22 um die Achse 46a des Ritzels 46 (Fig. 5) bis zum vollständigen Absenken der Heckscheibe 12 und gegebenenfalls des Schiebedachs 10 in der dafür am Boden des Kofferraums vorgesehenen Aufnahme 14 bewirkt. Es wird bemerkt werden, daß die Achse 46a bei der Drehung des Arms 22 sich um das freilaufende Ritzel 36 herum bewegt. Während dieses zweiten Hubs bewegt sich der Finger 34 längs des zweiten Teils 42 der Öffnung 32.

Umgekehrt erfolgt das Ausfahren der Heckscheibe 12 ausgehend von der in Fig. 5 dargestellten Stellung durch Ausführen einer Zugbewegung nach oben an der Heckscheibe, was die Bewegung des zweiten Endes 26 des Arms 22 längs des zweiten Teils 42 der Öffnung und dann längs des ersten Teils der letzteren bewirkt, wobei das Ritzel 46 ständig mit dem freilaufenden Ritzel 36 und während des zweiten Hubs mit dem Zahnsegment 44 im Eingriff steht. Dies führt in erster Linie zu einer Rotation des Arms 22 und dann zu einer Translation des letzteren in der Weise, daß am Ende des Ausfahrens der Heckscheibe eine Bewegung der letzteren nach unten und nach vorn im Fahrzeug bewirkt wird, um die Heckscheibe auf dem Falz abzusetzen.

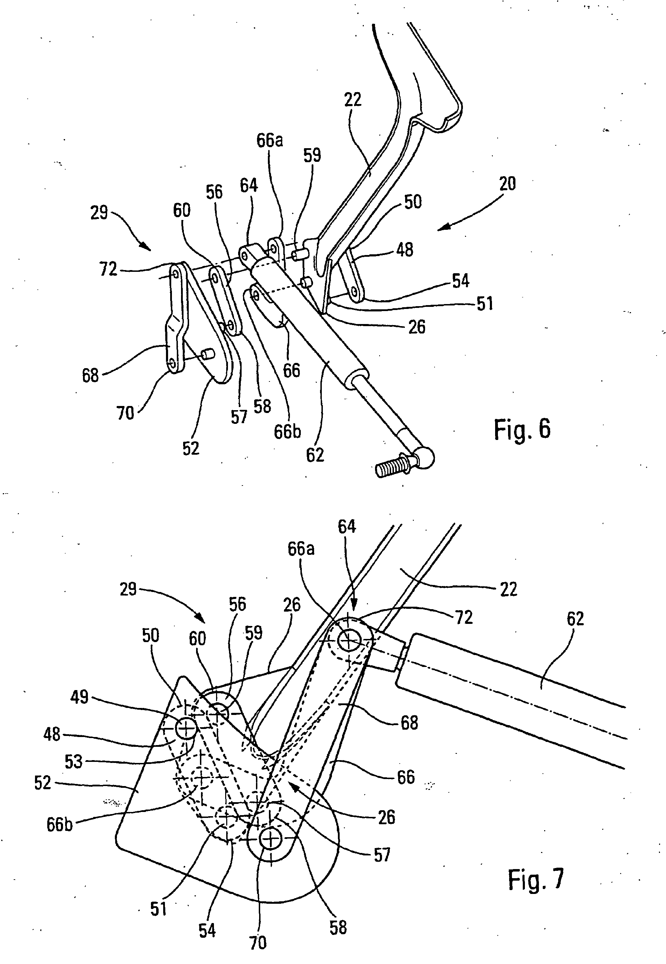

Eine zweite Ausführungsform der erfindungsgemäßen Vorrichtung wird nunmehr unter Bezugnahme auf die Figuren 6 bis 9 beschrieben.

Zunächst wird auf die Figuren 6 und 7 Bezug genommen; nach diesem Ausführungsbeispiel weist ein insgesamt mit 29 bezeichnetes Führungsorgan einen ersten auf einem mit der Karosserie des Fahrzeuges fest verbundenen Träger 52 um ein erstes Ende 50 drehbar montierten Schwingarm 48 auf, dessen zweites Ende 54 am zweiten Ende 26 des Arms 22, welcher eine erweiterte und abgeflachte Form aufweist, montiert ist.

Im übrigen weist das Organ 29 einen zweiten Schwingarm 56 auf, der mit einem Ende 58 drehbar auf dem Träger 52 montiert ist und dessen entgegengesetzten Ende 60 am Ende 26 des Arms 22 montiert ist.

Die beiden Schwingarme 48 und 56 sind in der ausgefahrenen Stellung des Arms 22, die in den Figuren 6 und 7 dargestellt wird, in der Weise positioniert, daß ihre Drehachsen 49 und 57 auf dem Träger 52 voneinander beabstandet sind, und die Drehachse 49 des ersten Schwingarms 48 auf dem Träger 52 bezogen auf den Arm 22 in der Nähe der Drehachse 59 des zweiten Schwingarms 56 angeordnet ist, und die Drehachse 57 des zweiten Schwingarms 56 bezüglich des Trägers 52 in der Nähe der Drehachse 51 des ersten Schwingarms 48 bezogen auf den Arm 22 angeordnet ist.

Vorzugsweise erstrecken sich die beiden Schwingarme 48 und 56 in der ausgefahrenen Stellung des Arms 22 im wesentlichen parallel zueinander, und die Drehachsen 49 und 59 des ersten Schwingarms 48 in bezug auf den Träger 52 und des zweiten Schwingarms 56 in bezug auf den Arm 22 einerseits und die Drehachsen 51 und 57 des ersten Schwingarms 48 in bezug auf den Arm 22 und des zweiten Schwingarms 56 in bezug auf den Träger 52 sind beidseitig der Längsachse des Arms 22 angeordnet.

Es wird weiter bemerkt werden, daß die Drehachse 49 des ersten Schwingarms 48 in bezug auf den Träger 52 einen Begrenzungsanschlag für die Winkelbewegung des Arms 22 in ausgefahrener Stellung darstellt, wobei der genannte Arm in der genannten ausgefahrenen Stellung mit der Auskehlung 53 seines abgeflachten Endes 26 zu liegen kommt.

Es wird weiter bemerkt werden, daß der erste Schwingarm 48, welcher den Arm 22 zu einer Bewegung entsprechend dem ersten vorstehend erwähnten Hub veranlaßt, d.h. also dahin tendiert, die Heckscheibe 12 oberhalb des Anschlags 11 anzuheben, ab seiner Drehachse 49 auf dem Träger 52 in einer solchen Weise ausgerichtet ist, daß sie sich im Laufe des genannten ersten Hubs im wesentlichen in einer zur Bewegungsrichtung des Arms 22 senkrechten Richtung erstreckt.

Wie bei dem vorstehend beschriebenen Ausführungsbeispiel unter Bezugnahme auf die Figuren 1 bis 5 beschrieben, wird die Führungsvorrichtung durch einen Servozylinder 62 ergänzt, dessen freies Ende 64 bei 66a an einem ersten Ende eines dritten Schwingarms 66 in drehbarer Weise montiert ist, dessen entgegengesetztes Ende bei 66b in drehbarer Weise am Arm 22 montiert ist.

Der genannte Zylinder 62 ist auf dem Träger 52 mittels eines vierten Schwingarms 68 angelenkt, von dem ein erstes Ende 70 auf dem Träger 62 in drehbarer Weise montiert ist und von dem ein zweites Ende 72 auf dem freien Ende 64 des Zylinders 62 in drehbarer Weise montiert ist.

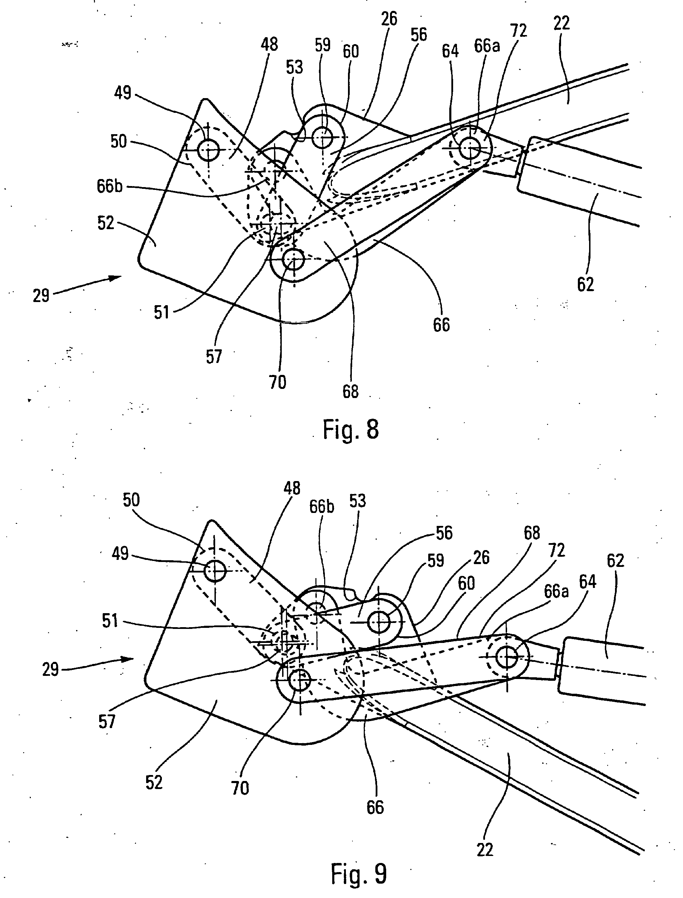

Bezug nehmend auf die Figuren 7 und 8 löst eine Betätigung der Heckscheibe 12 ausgehend von ihrer ausgefahrenen Stellung eine Drehung des ersten Schwingarms 48 in einer Richtung und eine Drehung des zweiten Schwingarms 56 in einer entgegengesetzten Richtung aus.

Die Drehbewegung dieser Schwingarme zwingen zunächst zu einer resultierenden Bewegung des Arms 22 entsprechend dem ersten Hub, d.h. also entsprechend einer Translationsbewegung nach oben und nach hinten im Kraftfahrzeug, bis die Drehachse 51 des ersten Schwingarms 46 des Arms 22 im wesentlichen zur Drehachse 57 des zweiten Schwingarms 56 in bezug auf den Träger 52 koaxial ist. Hierauf folgt eine Bewegung des Arms 22 nach dem zweiten Hub durch Rotation des genannten Arms um die Drehachse 57 des zweiten Schwingarms 56 bezogen auf den Arm 22.

Es wird dann, wie in dem vorstehend erwähnten Ausführungsbeispiel erwähnt, eine Bewegung des Arms nach zwei aufeinanderfolgenden Hüben erreicht, wobei einer das Abheben der Heckscheibe 12 oberhalb des Falzes 11 und der andere die Rotation der Heckscheibe 12 in Richtung des Pfeils 27 bis zu ihrer vollständigen Absenkung bewirkt, wobei das Ausfahren der Heckscheibe 12 nach einer umgekehrten Bewegung erfolgt.

Es wird bemerkt werden, daß die Erfindung nicht auf die vorstehend beschriebenen Ausführungsformen beschränkt ist.

Bei der obigen Beschreibung weist die Führungsvorrichtung einen einzigen, die Heckscheibe tragenden, mit einem Führungsorgan dieses Arms verbundenen Arm auf.

Selbstverständlich kann die Vorrichtung zwei Arme aufweisen, die jeweils eine Längskante der Heckscheibe tragen und jeweils mit einem Führungsorgan verbunden sind.

## Patentansprüche

1. Kraftfahrzeug mit einer versenkbaren Heckscheibe (12) und einer Führungsvorrichtung für die Heckscheibe (12), die mindestens einen Arm (22) umfaßt, welcher ein zur Aufnahme der Heckscheibe geeignetes erstes Ende (24) und ein zweites Ende (26) aufweist, das mit den Drehmitteln (46, 56) versehen ist, welche mit einem Führungsorgan (28, 29) zusammenwirken, das mit der Karosserie des Fahrzeuges fest verbunden ist, um das Drehen des Arms (22) zwischen einer ausgefahrenen Stellung und einer versenkten Stellung der Heckscheibe (12) zu führen, **dadurch gekennzeichnet, daß** das zweite Ende (26) des Arms (22) und das Führungsorgan (28, 29) jeweils Mittel (30, 34, 46; 48, 56) aufweisen, die zueinander komplementär und in der Weise angeordnet sind, daß die Bewegung des Arms (22) beim Versenken gemäß einem ersten Hub geführt wird, in dessen Verlauf der Arm (22) im wesentlichen in Translationsrichtung und anschließend gemäß einem zweiten Hub, in dessen Verlauf der Arm (22) sich um die genannten Drehmittel (46; 56) dreht, betätigt werden.

2. Kraftfahrzeug nach Anspruch 1, **dadurch gekennzeichnet, daß** die Heckscheibe (12) in ihrer ausgefahrenen Stellung auf einem karosseriefesten Falz (11) aufliegt, und während des ersten Hubes nach oben von diesem Falz (11) abhebt.

3. Kraftfahrzeug nach Anspruch 1 oder 2, **dadurch gekennzeichnet, daß** die Heckscheibe (12) in ihrer versenkten Stellung in einer im Boden des Kofferraums des Fahrzeuges vorgesehenen Aufnahme (14) untergebracht wird,

4. Kraftfahrzeug nach einem der vorhergehenden Ansprüche, **dadurch gekennzeichnet, daß** das Führungsorgan (28) eine mit der Karosserie des Fahrzeuges fest verbundene und mit einer Führungsöffnung (32) versehene Platine (30) aufweist, in der sich ein mit dem zweiten Ende (26) des Arms (22) verbundener Finger (34) bewegt, wobei die Führungsöffnung (32) erste Teile (40) und zweite Teile (42) aufweist, die aneinander anschließend so angeordnet sind, daß sie die Führung des Arms (22) jeweils gemäß dem ersten und dem zweiten Hub erlauben.

5. Kraftfahrzeug nach Anspruch 4, **dadurch gekennzeichnet, daß** die Platine (30) ein zentrales freilaufendes Ritzel (36) und einen koaxial dazu angeordneten kreisförmigen peripherischen Kragen (38) aufweist, der auf einem Teil seiner Innenfläche (39) ein Zahnsegment (44) aufweist, das am Rand des zweiten Teils (42) der Öffnung (32) liegt, wobei das Ritzel (36) und der Kragen (38) mit einem entsprechenden Ritzel (46) zusammenwirken, das mit dem Arm (22) fest verbunden ist und dessen Achse (46a) in bezug auf den Finger (34) versetzt ist.

6. Kraftfahrzeug nach Anspruch 5, **dadurch gekennzeichnet, daß** das Ritzel (46) des Arms (22) in ständigem Eingriff mit dem auf der Platine (30) montierten freilaufenden Ritzel (36) steht und während des ersten Hubs des Arms (22) durch die innere glatte Oberfläche (39) des Kragens (38) geführt wird, an dessen Ende das Ritzel (46) des Arms (22) mit dem Zahnsegment (44) in Eingriff steht, um die Drehung des Arms (22) zu steuern.

7. Kraftfahrzeug nach einem der vorhergehenden Ansprüche, **dadurch gekennzeichnet, daß** sie außerdem einen Servozylinder (45) aufweist, dessen freies Ende (45a) über einen Schwingarm (47) an den Arm (22) angelenkt ist.

8. Kraftfahrzeug nach Anspruch 1, **dadurch gekennzeichnet, daß** das Führungsorgan (29) erste und zweite Schwingarme (48, 56) aufweist, die jeweils in einer um ein erstes Ende (50, 58) drehbaren Weise auf einem mit der Fahrzeugkarosserie fest verbundenen Träger (52) montiert sind, und jeweils durch ein zweites Ende (54, 60) am Arm (22) in der Weise angeordnet sind, daß in der ausgefahrenen Stellung des Arms die jeweiligen Drehachsen (49, 57) des ersten Schwingarms (48) und des zweiten Schwingarms (56) jeweils bezüglich des Trägers (52) voneinander entfernt sind und in der Nähe der jeweiligen Drehachsen (59, 51) des zweiten Schwingarms (56) und des ersten Schwingarms (48) bezüglich des Arms (22) angeordnet sind.

9. Kraftfahrzeug nach Anspruch 8, **dadurch gekennzeichnet, daß** sich in der ausgefahrenen Stellung des Arms (22) die beiden Schwingarme (48, 56) im wesentlichen parallel erstrecken.

10. Kraftfahrzeug nach einem der Ansprüche 8 oder 9, **dadurch gekennzeichnet, daß** die Drehachse (49) des ersten Schwingarms (48) in bezug auf den Träger (52) einen Anschlag zur Begrenzung der Winkelbewegung des Arms (22) bildet, auf dem letzterer in seiner ausgefahrenen Stellung aufliegt, und **dadurch**, daß der erste Schwingarm (48) ausgehend von seiner Drehachse (49) in der Weise auf dem Träger (52) ausgerichtet ist, dem Arm (22) der erste Hub vorgegeben wird.

11. Kraftfahrzeug nach einem der Ansprüche 8 bis 10, **dadurch gekennzeichnet, daß** sie außerdem einen auf dem Träger (52) angelenkten Gelenkservozylinder (62) und einen dritten, mit einem drehbar (bei 66a) auf dem Arm (22) montierten Ende versehenen Schwingarm (66), und ein auf dem freien Ende (64) des Servozylinders (62) drehbar bei (66b) montiertes, entgegengesetztes Ende aufweist.

12. Kraftfahrzeug nach Anspruch 11, **dadurch gekennzeichnet, daß** der Servozylinder (62) auf dem Träger (52) mittels eines vierten Schwingarms (68) montiert ist, welcher an einem Ende (70) auf dem Träger (52) und am anderen Ende (72) auf dem freien Ende (64) des Zylinders (62) drehbar montiert ist.

13. Kraftfahrzeug, welches eine versenkbare Heckscheibe (12) und ein Schiebedach (10) aufweist, dessen Elemente in der Offenstellung des Dachs geeignet sind, oberhalb der Heckscheibe (12) zusammengelegt zu werden, **dadurch gekennzeichnet, daß** es mindestens eine Führungsvorrichtung (20) nach einem der Ansprüche 1 bis 12 aufweist, welche geeignet ist, die von dem Schiebedach (10) und der Heckscheibe (12) gebildete Einheit zu führen.

## Claims

1. Motor vehicle having a rear window (12) that can be lowered and a guiding device for the rear window (12) which comprises at least one arm (22), which has a first end (24) suitable to hold the rear window and a second end (26) which is provided with rotary means (46, 56) which interact with a guide element (28, 29) that is firmly connected to the vehicle body, in order to guide the rotation of the arm (22) between a moved-out position and a lowered position of the rear window (12), **characterized in that** the second end (26) of the arm (22) and the guiding element (28, 29) each have means (30, 34, 46; 48, 56) which are complementary to one another and are arranged in such a way that the movement of the arm (22) during lowering is guided in accordance with a first stroke, in the course of which the arm (22) is actuated substantially in the translational direction, and then in accordance with a second stroke, in the course of which the arm (22) rotates about the aforementioned rotary means (46; 56).

2. Motor vehicle according to Claim 1, **characterized in that**, in its moved-out position, the rear window (12) rests on a rabbet (11) fixed to the body and, during the first stroke, is lifted upwards off this rabbet (11).

3. Motor vehicle according to Claim 1 or 2, **characterized in that**, in its lowered position, the rear window (12) is accommodated in a receptacle (14) provided in the floor of the boot of the vehicle.

4. Motor vehicle according to one of the preceding claims, **characterized in that** the guiding element (28) has a plate (30) firmly connected to the body of the vehicle and provided with a guide opening (32), in which plate there moves a finger (34) connected to the second end (26) of the arm (22), the guide opening (32) having first parts (40) and second parts (42) which are arranged adjacent to each other in such a way that they permit the guidance of the arm (22) in each case in accordance with the first and the second stroke.

5. Motor vehicle according to Claim 4, **characterized in that** the plate (30) has a central freewheeling pinion (36) and a circular peripheral collar (38) arranged coaxially therewith which, on part of its inner surface (39), has a toothed segment (44) which is located at the edge of the second part (42) of the opening (32), the pinion (36) and the collar (38) interacting with a corresponding pinion (46) which is firmly connected to the arm (22) and whose axis (46a) is offset in relation to the finger (34).

6. Motor vehicle according to Claim 5, **characterized in that** the pinion (46) of the arm (22) is in continuous engagement with the freewheeling pinion (36) mounted on the plate (30) and, during the first stroke of the arm (22), is guided by the inner smooth surface (39) of the collar (38), at whose end the pinion (46) of the arm (22) is in engagement with the toothed segment (44) in order to control the rotation of the arm (22).

7. Motor vehicle according to one of the preceding claims, **characterized in that** it additionally has a servo cylinder (45), whose free and (45a) is attached to the arm (22) via a swinging arm (47).

8. Motor vehicle according to Claim 1, **characterized in that** the guiding element (29) has first and second swinging arms (48, 56) which are each mounted such that they can rotate about a first end (50, 58) on a support (52) firmly connected to the vehicle body, and are each arranged on the arm (22) by a second end (54, 60) in such a way that, in the moved-out position of the arm, the respective axes of rotation (49, 57) of the first swinging arm (48) and of the second swinging arm (56) are each at a distance from each other with respect to the support (52) and are arranged in the vicinity of the respective axes of rotation (59, 51) of the second swinging arm (56) and of the first swinging arm (48) with respect to the arm (22).

9. Motor vehicle according to Claim 8, **characterized in that**, in the moved-out position of the arm (22), the two swinging arms (48, 56) extend substantially in parallel.

10. Motor vehicle according to either of Claims 8 and 9, **characterized in that** the axis of rotation (49) of the first swinging arm (48) in relation to the support (52) forms a stop to limit the angular movement of the arm (22), on which the latter rests when in its moved-out position, and **in that** the first swinging arm (48), starting from its axis of rotation (49), is aligned with the support (52) in such a way that the first stroke is predefined to the arm (22).

11. Motor vehicle according to one of Claims 8 to 10, **characterized in that** it additionally has a jointed servo cylinder (62) attached to the support (52) and a third swinging arm (66) provided with an end rotatably mounted on the arm (22) (at 66a), and an opposite end rotatably mounted on the free end (64) of the servo cylinder (62) at (66b).

12. Motor vehicle according to Claim 11, **characterized in that** the servo cylinder (62) is mounted on the support (52) by means of a fourth swinging arm (68), which is rotatably mounted at one end (70) on the support (52) and at the other end (72) on the free end (64) of the cylinder (62).

13. Motor vehicle which has a rear window (12) that can be lowered and a sliding roof (10), whose elements, in the open position of the roof, are suitable to be folded up together above the rear window (12), **characterized in that** it has at least one guiding device (20) according to one of Claims 1 to 12 which is suitable to guide the unit formed by the sliding roof (10) and the rear window (12).

## Revendications

1. Véhicule automobile comportant une lunette arrière escamotable (12) et un dispositif de guidage pour la lunette arrière (12), dispositif qui comprend au moins un bras (22) qui présente une première extrémité (24) adaptée à recevoir la lunette et une deuxième extrémité (26) qui est munie de moyens de pivotement (46, 56) qui coopèrent avec un organe de guidage (28, 29) solidaire de la carrosserie du véhicule pour guider le pivotement du bras (22) entre une position déployée et une position escamotée de la lunette arrière (12), **caractérisé en ce que** la deuxième extrémité (26) du bras (22) et l'organe de guidage (28, 29) comprennent des moyens respectifs (30, 34, 46 ; 48, 56) qui sont mutuellement complémentaires et disposés de façon à guider le déplacement du bras (22), lors de l'escamotage, selon une première course au cours de laquelle le bras (22) est déplacé sensiblement en translation, et ensuite selon une deuxième course au cours de laquelle le bras (22) pivote autour desdits moyens de pivotement (46 ; 56).

2. Véhicule automobile selon la revendication 1, **caractérisé en ce que** la lunette arrière (12) repose dans sa position déployée sur une feuillure (11) solidaire de la carrosserie, et se dégage de cette feuillure (11) vers le haut pendant la première course.

3. Véhicule automobile selon la revendication 1 ou 2, **caractérisé en ce que** la lunette arrière (12) est rangée dans sa position escamotée dans un logement (14) prévu dans le fond du coffre à bagages du véhicule.

4. Véhicule automobile selon l'une des revendications précédentes, **caractérisé en ce que** l'organe de guidage (28) comporte une platine (30) solidaire de la carrosserie du véhicule et munie d'une ouverture de guidage (32) dans laquelle se déplace un doigt (34) relié à la deuxième extrémité (26) du bras (22), l'ouverture de guidage (32) comportant une première partie (40) et une deuxième partie (42) qui sont disposées dans le prolongement l'une de l'autre de telle sorte qu'elles permettent le guidage du bras (22) respectivement selon la première et la deuxième courses.

5. Véhicule automobile selon la revendication 4, **caractérisé en ce que** la platine (30) comporte un pignon fou central (36) et une collerette périphérique circulaire (38) disposée coaxialement à ce pignon, cette collerette (38) présentant sur une partie de sa surface intérieure (39) un secteur denté (44) bordant la deuxième partie (42) de l'ouverture (32), sachant que le pignon (36) et la collerette (38) coopèrent avec un pignon correspondant (46) solidaire du bras (22) et dont l'axe (46a) est décalé par rapport au doigt (34).

6. Véhicule automobile selon la revendication 5, **caractérisé en ce que** le pignon (46) du bras (22) est en permanence engrené avec le pignon fou (36) monté sur la platine (30), et est guidé par la surface intérieure lisse (39) de la collerette (38) pendant la première course du bras (22), à la fin de laquelle le pignon (46) du bras (22) engrène avec le secteur denté (44) pour commander le pivotement du bras (22).

7. Véhicule automobile selon l'une des revendications précédentes, **caractérisé en ce que** le dispositif de guidage comporte en outre un vérin d'assistance (45) dont l'extrémité libre (45a) est articulée sur le bras (22) par l'intermédiaire d'une biellette (47).

8. Véhicule automobile selon la revendication 1, **caractérisé en ce que** l'organe de guidage (29) comporte une première et une deuxième biellettes (48, 56) qui sont montées chacune de manière pivotante, par une première extrémité (50, 58), sur un support (52) solidaire de la carrosserie du véhicule, et qui sont chacune disposées par une deuxième extrémité (54, 60) sur le bras (22) de telle sorte que, dans la position déployée du bras, les axes de pivotement respectifs (49, 57) de la première biellette (48) et de la deuxième biellette (56) par rapport au support (52) sont éloignés l'un de l'autre et sont disposés au voisinage des axes de pivotement respectifs (59, 51) de la deuxième biellette (56) et de la première biellette (48) par rapport au bras (22).

9. Véhicule automobile selon la revendication 8, **caractérisé en ce que**, dans la position déployée du bras (22), les deux biellettes (48, 56) s'étendent de façon sensiblement parallèle.

10. Véhicule automobile selon la revendication 8 ou 9, **caractérisé en ce que** l'axe de pivotement (49) de la première biellette (48) par rapport au support (52) constitue une butée de limitation du déplacement angulaire du bras (22) sur laquelle ce dernier repose dans sa position déployée, et **en ce que** la première biellette (48) est orientée à partir de son axe de pivotement (49) sur le support (52) de manière à imposer au bras (22) la première course.

11. Véhicule automobile selon l'une des revendications 8 à 10, **caractérisé en ce que** le dispositif de guidage comporte en outre un vérin d'assistance (62) articulé sur le support (52) et une troisième biellette (66) dotée d'une extrémité montée pivotante (en 66a) sur le bras (22) et d'une extrémité opposée montée pivotante (en 66b) sur l'extrémité libre (64) du vérin d'assistance (62).

12. Véhicule automobile selon la revendication 11, **caractérisé en ce que** le vérin d'assistance (62) est monté sur le support (52) au moyen d'une quatrième biellette (68) montée pivotante à une extrémité (70) sur le support (52) et à son autre extrémité (72) sur l'extrémité libre (64) du vérin (62).

13. Véhicule automobile, qui présente une lunette arrière escamotable (12) et un toit ouvrant (10) dont les éléments sont à même d'être, dans la position ouverte du toit, rassemblés au-dessus de la lunette, **caractérisé en ce qu'**il présente au moins un dispositif de guidage (20) selon l'une des revendications 1 à 12, qui est à même de guider l'ensemble constitué par le toit ouvrant (10) et la lunette arrière (12).
